# EUROPÄISCHE PATENTANMELDUNG

(11) **EP 1 845 700 A1**
(43) Veröffentlichungstag der Anmeldung: **17.10.2007**
(21) Anmeldenummer: 06112447.5
(22) Anmeldetag: 10.04.2006
(51) Int. Cl.: H04N 1/00, H04N 7/00, G06T 9/00, G06T 5/00

(54) **Verfahren und Vorrichtung zur Vorbereitung der Erstellung von Fotoreproduktionen**

(71) Anmelder: Pixyfoto AG, 8212 Neuhausen (CH); Inter.net2day Gmbh, 82008 Unterhaching (DE)
(72) Erfinder: Dworaczek, Werner, 85635, Hoehenkirchen-Siegertsbrunn (DE); Liedl, Werner, 83052, Bruckmuehl (DE)
(74) Vertreter: Betten & Resch

(57) **Zusammenfassung**

Verfahren zur Vorbereitung der Erstellung eines basierend auf ein oder mehreren digitalen Original-Bildern eines Client-Computers von einem Produktionsserver auf der Grundlage von Druckvorlagen zu erstellenden Fotoprodukts, wobei das Verfahren aufweist:
basierend auf einer minimalen Informationsdichte, die zur Erzielung einer gewünschten Mindestproduktionsqualität erforderlich ist, sowie der Informationsdichte eines Originalbildes des Client-Computers, Ermittlung einer maximalen Downsamplingrate;
Downsampling des Originalbildes mittels der ermittelten Rate; und
Übertragen des down-gesampelten Original-Bildes als Basis für die Druckvorlage über eine Datenverbindung vom Client-Computer zum Produktionsserver

## Beschreibung

### GEBIET DER ERFINDUNG

Die vorliegende Erfindung betrifft ein Verfahren und eine Vorrichtung zur Vorbereitung der Erstellung von Fotoreproduktionen, insbesondere zur Verwendung bei der Online-Bestellung von Fotoproduktionen.

### HINTERGRUND DER ERFINDUNG

Das Internet hat sich inzwischen zu einem selbstverständlichen Kommunikations-Medium etabliert, über welches auch Warenbestellungen aller Art abgewickelt werden *(E-Commerce).* Die Kunden besuchen dazu die häufig mit *Online-Shop* bezeichneten Webseiten durch schlichte Eingabe einer sogenannten URL - *Uniform Resource Locator -* in einen Web-Browser. Der Kunde startet dazu den Web-Browser auf einem beliebigen Rechner (häufig als *Client-PC* bezeichnet), der mit dem Internet verbunden ist. Web-Browser gibt es für nahezu alle heute im Einsatz befindlichen Computermodelle/Betriebssysteme. Mit ihrer Hilfe werden auf dem Bildschirm des Client-PCs Ausgaben generiert, die als HTML-Code - *Hypertext Markup Language -* über das Internet übertragen werden, können Eingaben erfolgen und in sie können auch kleinere Programme zur Ausführung "hineingeladen" werden.

Zur Realisierung von im Browser ausführbaren Programmen kommen im wesentlichen 2 Technologien zum Einsatz
o ActiveX von der Firma Microsoft
o Java-Applets basierend auf dem Java-Modell der Firma SUN Microsystems

Um statische HTML-Seiten mit dynamischen Elementen auszustatten kommt zusätzlich häufig auch Java-Script zum Einsatz, eine objekt-orientierte Script-Sprache, die i.d.R. ausschließlich Client-seitig eingesetzt wird.

Im Bereich der Digitalfotographie hat sich das Internet ebenfalls als Umgebung für Warenbestellungen etabliert. Im Gegensatz zu klassischen E-Commercerespektive Online-Shop-Lösungen basiert hier die Produktion der Waren auf den vom Kunden mit seiner Digitalkamera erstellten Fotos, die als Daten - zunächst in der Digitalkamera - gespeichert sind. Um daraus Produkte wie
o Fotoabzüge
o Persönliche Fotobücher
o Persönliche Grußkarten
o Persönliche Fotokalender
o etc.
online bestellen zu können, müssen folglich die Fotodaten des Kunden zuerst an den Anbieter bzw. Online-Shop-Betreiber übertragen werden. Auch hierfür bietet sich das Internet an.

Um die Übertragung der Fotodaten möglichst komfortabel zu gestalten, werden meist spezielle Upload-Programme in den Browser des Kunden vom Server des Betreibers geladen. Gebräuchlich ist hier auch der sogenannte HTML-Upload. Dabei werden die Daten über das http-Protokoll an den Server übertragen. Da diese Form der Datenübertragung sehr unkomfortabel ist, hat sie in diesem Bereich allerdings eine zunehmend geringere Bedeutung.

Bei Online-Fotodiensten müssen die Digitalkamerafotos zuerst auf den Server des Anbieters hochgeladen werden, um Fotoprodukte wie Fotoabzüge und andere bestellen zu können. Der generelle Ablauf einer Foto-Bestellung verläuft daher im Großen und Ganzen nach einem Schema, welches in Fig. 1A dargestellt ist. Im Schritt 100 werden die Bilddateien (die Originalbilder, die auf dem PC des Kunden gespeichert sind oder von einem Datenträger gelesen werden) auf den Server des Anbieters (z. B. eines Fotolabors) hochgeladen. Dann konfiguriert im Schritt 110 der Kunde mit Hilfe der Online-Lösung das zu erstellende Produkt. Die Konfiguration des Kunden umfaßt Informationen, in welcher Form das Produkt erstellt werden soll, insbesondere in welcher Größe bzw. welchem Format die Fotos reproduziert bzw. gedruckt werden sollen. Neben der Grösseninformation können dabei auch weitere Festlegungen getroffen werden, etwa Beschriftungen und Ausschnittsauswahl bei Grußkarten, etc. Schließlich wird im Schritt 120 die Bestellung durchgeführt, was den Server veranlaßt, die Produktion entsprechend den Konfigurationsinformationen auf der Grundlage der übermittelten Originalbilder durchzuführen.

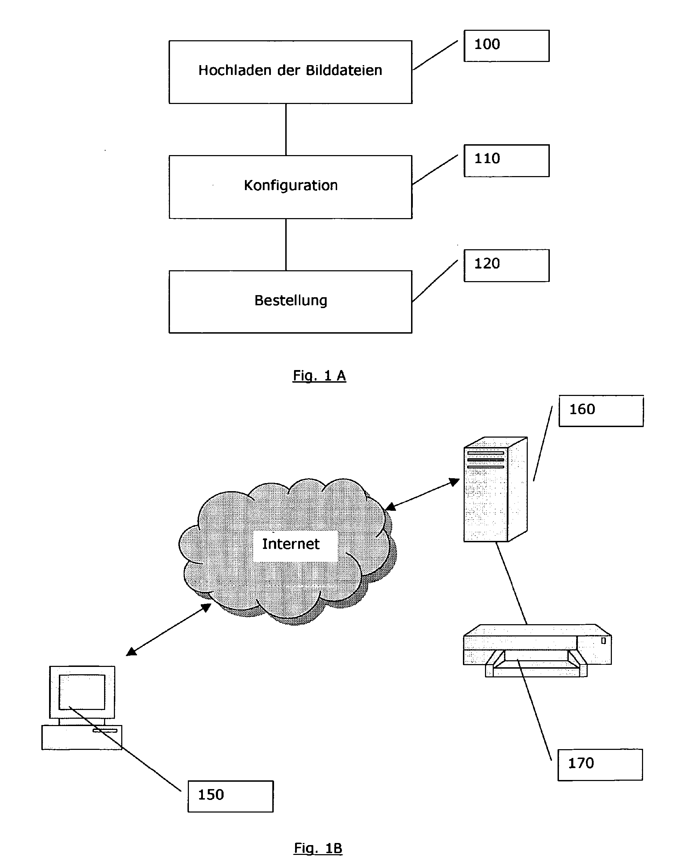

Fig. 1B zeigt ein Beispiel einer Systemkonfoguration für die Online-Bestellung. Von einem Client-Terminal 150 wird über das Internet die Bestellung an einen Produktionsserver 160 übersandt, der dann auf einer Druckvorrichtung 170 die bestellten Reproduktionen produziert. Bei einer alternativen Systemkonfiguration (nicht gezeigt) kann ein separater Bestellserver vorgesehen sein, der für die Abwicklung des Bestellvorgangs zuständig ist und dann die Bestellung an den Produktionsserver weiterleitet. Dabei werden dann die "fertigen" Bilddaten an den für die Produktion der Ausdrucke zuständigen Produktionsserver gesandt.

Problematisch bei einem Verfahren gemäß dem Stand der Technik wie in Fig. 1A dargestellt ist dabei insbesondere das Hochladen der Bilddateien.

Digitalkamerafotos belegen trotz komprimierender Datenformate wie JPEG nicht unerheblich Speicherplatz. So liegt der durchschnittliche Platzbedarf für ein Foto einer handelsüblichen 3.2 Megapixelkamera in hoher Qualität bei schon ca. 1.2 MB. Möchte ein Kunde für 50 dieser Digitalkamera-Fotos Abzüge im Format 10x15 online bestellen, dann müssen schon etwa 60 MB Daten vom Kunden-PC an den Server des Anbieters übertragen werden.

Auch im Zeitalter von schnellen DSL-Internet-Verbindungen führt das zu nicht unerheblichen Übertragungszeiten. Bei einem DSL-Standardanschluss mit 128 kBit/s Upload-Geschwindigkeit kämen bei der oben angedachten Bestellung schon Übertragungszeiten von ca. 1 Stunde zustande, was die Attraktivität und generelle Nutzbarkeit von Online-Fotodiensten merklich beeinträchtigt. Bei Fotobüchern, wo zwischen 100 und 400 Fotos hochgeladen werden müßten, erreichen die Übertragungszeiten aufgrund der offensichtlich enormen Datenmenge Größenordnungen, die Akzeptanzgrenzen überschreiten.

Als alternative Lösung gibt es im Stand der Technik die Verwendung einer Client-Software, über die Kunden Fotobücher zunächst "offline" auf Ihrem PC erstellen können. Das dabei generierte Fotobuch wird in der Regel auf CD gebrannt, die der Kunde dem Anbieter auf dem konventionellen Postweg zusenden muß. Ein Upload des offline erstellten Fotobuches ist zwar auch möglich, führt jedoch dann wiederum zur bereits geschilderten Hochlade-Problematik.

Es ist daher eine Aufgabe der vorliegenden Erfindung, die beim Stand der Technik auftretenden Nachteile zu vermeiden und ein effizienteres Verfahren zur Vorbereitung der Erstellung von Fotoprodukten bereitzustellen.

### ZUSAMMENFASSUNG DER ERFINDUNG

Gemäß einem Ausführungsbeispiel umfaßt die Erfindung ein Verfahren zur Vorbereitung der Erstellung eines basierend auf ein oder mehreren digitalen Original-Bildern eines Client-Computers von einem Produktionsserver auf der Grundlage von Druckvorlagen zu erstellenden Fotoprodukts, wobei das Verfahren aufweist:
basierend auf einer minimalen Informationsdichte, die zur Erzielung einer gewünschten Mindestproduktionsqualität erforderlich ist, sowie der Informationsdichte eines Originalbildes des Client-Computers, Ermittlung einer maximalen Downsamplingrate;
Downsampling des Originalbildes mittels der ermittelten Rate; und Übertragen des down-gesampelten Original-Bildes als Basis für die Druckvorlage über eine Datenverbindung vom Client-Computer zum Produktionsserver oder Bestellserver.
Damit wird ausgenutzt, dass für die meisten Formate, die bei einer Fotoreproduktion vom Kunden gewünscht werden, ab einer gewissen Mindestinformationsdichte (z.B. 220 PPI) kein zusätzlicher signifikanter Qualitätszuwachs erzielbar ist und mittels Downsampling auf diese Informationsdichte die erforderliche Übertragungszeit deutlich reduziert werden kann. Die Übertragung kann direkt zu einem Produktionsserver oder zu einem Bestellserver erfolgen, der dann die "fertigen" Bilddaten an den für die tatsächliche Produktion zuständigen Produktionsserver übermittelt.

Gemäß einem Ausführungsbeispiel umfaßt das Verfahren:
Konfiguration des Fotoprodukts durch den Client-Computer, wobei die Konfiguration des Fotoprodukts zumindest die Auswahl der Größe der jeweils zu produzierenden Bilder umfaßt;
basierend auf der durch die Konfiguration vorgegebenen Größe eines zu produzierenden Bildes, Ermittlung einer entsprechenden minimalen Informationsdichte, bei der unter der vorgegebenen Produktionsgrösse noch hinreichende Bildqualität bei der Produktion erzielt werden kann;
basierend auf der ermittelten minimalen Informationsdichte sowie der Informationsdichte eines Originalbildes des Client-Computers, Ermittlung einer maximalen Downsamplingrate;
Downsampling des Originalbildes mittels der ermittelten Rate; und Übertragen des down-gesampelten Original-Bildes als Basis für die Druckvorlage über eine Datenverbindung vom Client-Computer zum Produktionsserver oder einem für die Abwicklung des Bestellvorgangs zuständigen Bestellserver.

Durch die Ermittlung einer Grenzinformationsdichte basierend auf der gewählten Produktionsgrösse sowie einer zugeordneten Downsamplingrate wird eine Anpassung an genau diejenige minimale Informationsdichte erzielt, die für die gewählte Produktionsgrösse erforderlich ist. Entsprechend wird eine drastische Reduktion des Datenübertragungsaufwands bei gleichzeitiger Sicherstellung eines qualitativen Mindeststandards für die Produktion ermöglicht.

Gemäß einem Ausführungsbeispiel weist das Verfahren ferner auf:
Erstellen von Vorschaubildern mit reduzierter Datenmenge am Client-Computer basierend auf den Originalbildern des Client-Computers;
Übertragen der Vorschaubilder vom Client-Computer an den Produktionsserver oder Bestellserver;
Konfiguration des Fotoprodukts durch den Client-Computer über die Datenverbindung und Anzeige des konfigurierten Fotoprodukts auf dem Client-Computer, wobei die Konfiguration des Fotoprodukts zumindest die Festlegung der Größe der jeweils zu produzierenden Bilder umfaßt.

Das Erstellen und Übertragen von Vorschaubildern ermöglicht schnell die Konfiguration des Produkts und danach das gezielte Hochladen der Originalbilder in einer Informationsmenge, wie sie tatsächlich für die gewünschte Mindestqualität erforderlich ist. Die Festlegung der Größe kann explizit durch Benutzerauswahl oder auch implizit erfolgen, z. B. durch Vorgabe der Produktionsgrösse für ein ausgewähltes Layout eines Fotoalbums.

Gemäß einem Ausführungsbeispiel weist das Verfahren ferner auf:
zusätzlich oder alternativ zur Ermittlung der minimalen Pixeldichte bei durch die Konfiguration vorgegebener Produktionsgrösse, Ermittlung einer maximalen Kompressionsrate;
Ermittlung der Kompressionsrate des Originalbildes;
falls die maximale Kompressionsrate größer ist als die Kompressionsrate des Originalbildes, Komprimieren des Originalbildes vor der Übertragung an den Produktionsserver oder Bestellserver und/oder
falls die maximale Kompressionsrate kleiner ist als die Kompressionsrate des Originalbildes, Verzicht auf die Durchführung einer Kompression und/oder eines Downsampling.

Dies trägt dem Umstand Rechnung, dass bereits komprimierte Originalbilder, insbesondere hoch komprimierte Originalbilder, die mit einem verlustbehafteten Kompressionsverfahren wie etwa JPEG komprimiert wurden, vorsichtiger zu behandeln sind als unkomprimierte oder wenig komprimierte Originalbilder, da eine weitere Kompression zuzüglich ggf. Downsampling bereits komprimierter Originalbilder eventuell den qualitativen Mindeststandard gefährdet.

Gemäß einem Ausführungsbeispiel weist das Verfahren ferner auf: Downsampeln des Originalbildes und Komprimieren des Originalbildes mit der maximalen Kompressionsrate;
Vergleich der Dateigrösse des resultierenden Bildes mit der Dateigrösse des Originalbildes;
falls die resultierende Dateigrösse nicht um ein Mindestmass kleiner ist als die Dateigrösse des Originalbildes, Verzicht auf Downsampling und/oder Kompression des Originalbildes,.

Hiermit soll sichergestellt werden, dass die mit der Datenreduktion verbundenen Risiken nur dann eingegagen werden, wenn eine Mindestreduktion erzielt werden kann.

Gemäß einem Ausführungsbeispiel weist das Verfahren ferner auf:
Einhalten einer Sicherheitsmarge, um die die ermittelte zu verwendende Kompressionsrate reduziert wird.

Dies berücksichtigt, dass die Ermittlung der Kompressionsrate des Originalbildes
eventuell ungenau ist und auch der Effekt einer weiteren Kompression mit gewissen Unwägbarkeiten behaftet ist.

Gemäß einem Ausführungsbeispiel weist das Verfahren ferner auf:
falls ein Originalbild in der zu erstellenden Fotoproduktion mehrfach verwendet wird, lediglich einmaliges Übertragen des datenreduzierten Bildes in der höchsten erforderlichen Qualität.

Dies verringert den erforderlichen Datenübertragungsaufwand.

Gemäß einem Ausführungsbeispiel werden für jeweils unterschiedliche durch die Konfiguration vorgegebene Produktionsgrössen die entsprechende erforderliche Pixeldichte und gegebenenfalls die ferner zugeordnete maximale Kompressionsrate mittels einer Nachschlagtabelle ermittelt.

Gemäß einem Ausführungsbeispiel wird eine Vorrichtung bereitgestellt zur Vorbereitung der Erstellung eines basierend auf ein oder mehreren digitalen Original-Bildern eines Client-Computers von einem Produktionsserver auf der Grundlage von Druckvorlagen zu erstellenden Fotoprodukts, welche aufweist:
eine Einrichtung zur Ermittlung einer maximalen Downsamplingrate basierend auf einer minimalen Informationsdichte, die zur Erzielung einer gewünschten Mindestproduktionsqualität erforderlich ist, sowie der Informationsdichte eines Originalbildes des Client-Computers;
Downsampling des Originalbildes mittels der ermittelten Rate; und Übertragen des down-gesampelten Original-Bildes als Basis für die Druckvorlage über eine Datenverbindung vom Client-Computer zum Produktionsserver oder einem Bestellserver.

Gemäß einem Ausführungsbeispiel weist die Vorrichtung ferner auf:
eine Einrichtung zur Durchführung eines Verfahrens gemäß einem der Ausführungsbeispiele.

Gemäß einem Ausführungsbeispiel wird ein Computerprogramm mit von einem Computer ausführbarem Code, welcher den Computer veranlaßt, ein Verfahren gemäß einem der Ausführungsbeispiele auszuführen, bereitgestellt.

### KURZE BESCHREIBUNG DER ZEICHNUNGEN

Fig. 1A zeigt schematisch einen Bestellprozeß gemäß dem Stand der Technik.
Fig. 1B zeigt schematisch eine Systemkonfiguration für eine Online-Bestellung einer Fotoproduktion
Fig. 2 zeigt ein Flußdiagramm, das schematisch ein Ausführungsbeispiel der Erfindung illustriert.
Fig. 3 zeigt ein Flußdiagramm, das schematisch ein weiteres Ausführungsbeispiel der Erfindung illustriert.
Fig. 4 zeigt ein Flußdiagramm, das schematisch ein weiteres Ausführungsbeispiel der Erfindung illustriert.
Fig. 5 zeigt ein Flußdiagramm, das schematisch ein weiteres Ausführungsbeispiel der Erfindung illustriert.

### DETAILLIERTE BESCHREIBUNG

Nachfolgend wird die vorliegende Erfindung anhand mehrerer Ausführungsbeispiele unter Bezugnahme auf die beigefügten Zeichnungen im Detail beschrieben.

Zunächst wird hierzu noch etwas genauer auf den tatsächlichen Produktionsprozeß bei der Herstellung der Fotoprodukte eingegangen.
Moderne Digitalbelichter und andere digitale Ausgabegeräte, wie sie in Fotolaboren eingesetzt werden, verfügen heutzutage in der Regel über deutlich höhere Auflösungen, teilweise im Bereich von mehreren Tausend DPI (dot per inch), als die zu druckenden Vorlagen aufweisen. Die Steuersoftware in diesen Geräten setzt daher über spezielle "Raster Image Prozessoren" mit Hilfe von Interpolationsverfahren geringer aufgelöste Vorlagen in die entsprechende Druckauflösung um. Die hohe Qualität dieser Verfahren und die beschränkten Auflösungsfähigkeiten des menschlichen Auges führen dazu, dass hochgerechnete Reproduktionen von nicht hochgerechneten ab einer bestimmenden Eingangsinformationsdichte nicht mehr zu unterscheiden sind. Diese Eigenschaft macht sich die vorliegende Erfindung nun zunutze, indem sie basierend auf einer (Grenz-)Informationsdichte, die von der Reproduktionsgrösse des zu erstellenden Fotoprodukts abhängen kann, eine Downsampling-Rate und/oder eine Kompressionsrate für die Originalbilder ermittelt, mit der die Originalbilder zur Datenreduktion und zur Verringerung der erforderlichen Upload-Zeit bearbeitet werden können. Die Grenzinformationsdichte ist dabei so gewählt, dass jenseits dieser Informationsdichte, die z. B. in PPI (pixel per inch) ausgedrückt wird, zusätzliche Qualitätsverbesserungen nicht oder nicht mehr signifikant erzielbar sind. Da sich Qualitätsverbesserungen über eine Vergrößerung dieser Eingangsinformationsdichte nicht mehr erzielen lassen, können darüber hinausgehende Information z. B. durch Downsampling eliminiert werden.

Die genaue Grenze, ab der keine Verbesserung mehr erzielt werden kann, läßt sich beispielsweise über Testreihen ermitteln. Bei der Reproduktion von Digitalkamerafotos zeigt sich beispielsweise, dass schon ab einer Eingangspixeldichte von etwa 220 PPI keine sichtbaren Qualitätsverbesserungen mehr erzielt werden können. Für einen Fotoabzug in der gängigen Größe 10x15 bedeutet dies, dass theoretisch nur ca. 1.1 Megapixel Informationen für eine optimale Belichtung benötigt werden. Mittels der Durchführung von Testreihen können entsprechende Werte für die Grenz-Informationsdichte auch für andere Formate ermittelt werden. Lediglich beispielhaft ist in der nachfolgenden Tabelle ein Ausschnitt aus einer solchen Testreihe dargestellt, der einige Informationsdichten, die im Rahmen der Testreihe genutzt werden, sowie die den Informationsdichten zugeordnete Zahl von Pixeln in x- und y-Richtung sowie die Gesamtgröße für unterschiedliche Reproduktionsgrößen angibt. Die Unterschiede der Gesamtpixelzahl für unterschiedliche Pixedlichten verdeutlicht dabei das Einsparpotenzial. Die tatsächlich bei einer Testreihe verwendete Tabelle kann dabei eine in kleinere Einzelschritte (z. B. von zehn PPI) unterteilt sein und sich beispielsweise von100 PPI bis 300 PPI erstrecken. Durch Begutachtung der mit diesen (in der Tabelle gezeigten sowie weiteren) Informationsdichten produzierten Fotos durch beispielsweise Testpersonen erhält man schließlich für jede Größe die zu berücksichtigende formatspezifische Grenzinformationsdichte, d.h. diejenige Pixeldichte, ab der man die gewünschte Mindestqualität erreicht. Hierzu werden die Eindrücke der Testpersonen ausgewertet, die Testprints eines Formats in unterschiedlichen Pixeldichten (gemäss der Testreihentabelle) begutachten. Aus deren Einschätzung ermittelt man dann die Grenzpixeldichte für ein Format, ab der keine wesentlochje Verbesserung der Qualität durch weitere Erhöhung der Pixeldichte erzielt wird. Dies kann beispielsweise bei einem Format 10X15 cm die Pixedldichte 220 PPI sein, wobei dann davon auszugehen ist, dass höhere (in der Tabelle nicht gezeigte) Pixeldichten bei der Testreihe keine signifikante Qualitätsverbesserung gegenüber der gewünschten Mindestqualität ergeben

Auf diese Weise werden zu jedem Produktionsformat Grenzpixeldichten ermittelt, die dann dem Produktionsformat zugeordnet werden.

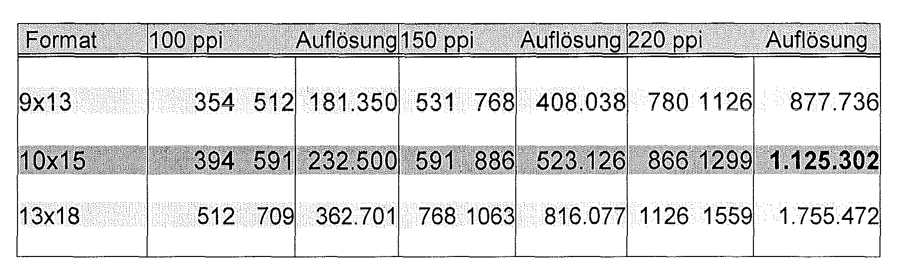

Die Festlegung der Grenzinformationsdichten, also der Informationsdichten (in ppi), ab der für ein bestimmtes Reproduktionsformat die angestrebte Qualität der Reproduktion erreicht wird, kann wie erwähnt über Testreihen ermittelt werden. Hierzu werden für jedes Paar bestehend aus einem Reproduktionsformat (9x13, 10×15, ...) und einer Informationsdichte aus einem ausgewählten Informationsdichtenbereich (z.B. 100 bis 300 ppi in 10er Schritten) Testreproduktionen, möglichst mit mehreren Bildmotiven, durchgeführt. Durch Begutachtung und Bewertung der Testreproduktionen nach einfachen Schulnoten: 1, 2 , 3, ... oder mit höherer Granulatität: 1, 1-, 1-2, 2+ ... durch eine Menge von Testpersonen erhält man von jeder Testperson für jedes Bild eine Einschätzung der Qualität als "Note". Durch Durchschnittsbildung der Bewertungen von Bildern, die demselben Paar (Format,Informationsdichte) angehören erhält man so eine Ergebnistabelle. Definiert man nun die gewünschte zu erreichende Qualität der Reproduktion ebenfalls als Schulnote so kann man leicht aus der Ergebnistabelle für jedes Format die zugehörige Informationsdichte herauslesen, die für die definierte Qualität die Grenzinformationsdichte darstellt. Diese Werte können dann dem Verfahren als einfache Abbildung Format -> Grenzinformationsdichte zur Verfügung gestellt werden.

Definiert man die gewünschte Qualität sehr hoch (Durchschnittswert im Bereich 1,5) so entsprechen die hieraus sich ergebenden Grenzinformationsdichten den Dichten, ab denen praktisch keine Steigerung der Qualität mehr erkennbar ist.
Die Testreihe kann auch auf andere Weise durchgeführt werden, z.B. ohne Benotung, indem beispielsweise die Testpersonen diejenigen Bilder zusammenfassen, die nach ihrer Meinung gleichwertige Qualität besitzen. Die Grenzinformationsdichten der Formate ergeben sich dann aus den Bildern mit der jeweils niedrigsten Informationsdichte, die - von mindestens x% der Testpersonen - noch der besten Gruppe zugeordnet wurden.

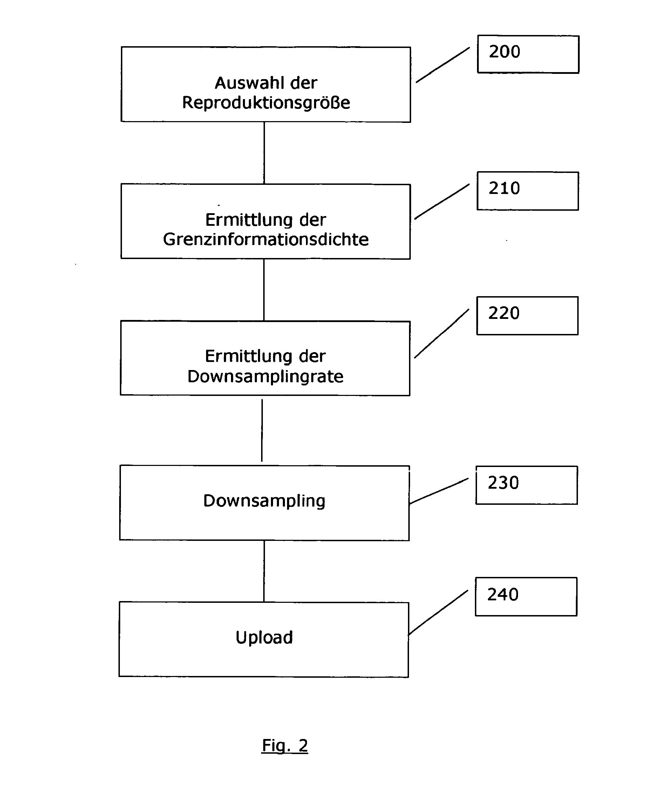

Auf der Grundlage der beispielsweise über Testreihen ermittelten Grenzinformationsdichten für die jeweiligen Produktionsformate kann dann ein Verfahren wie schematisch im Fig. 2 dargestellt durchgeführt werden. Für die Ausführung des Verfahrens gibt es dabei insbesondere die drei folgenden Möglichkeiten: i) Durchführung des Verfahrens auf dem Client über ein dort installiertes, geeignetes Programm, ii)Durchführung des Verfahrens über ein im Client-Browser laufendes Applet bzw. ActiveX Control, sowie iii) Durchführung des Verfahrens über ein im Client-Browser laufendes Applet bzw- ActiveX Control, wobei benötige Parameter auf dem Server berechnet werden und an die Client zurückübertragen werden.

Zunächst wählt der Kunde auf dem Client PC die Reproduktionsgrösse von einem oder mehreren Fotos im Schritt 200, um damit das Fotoprodukt zu konfigurieren. Zu der oder den ausgewählten Reproduktionsgrössen (z. B. Foto 1 9X 13 cm, Fotos 2 bis 5 10 X 15 cm, Foto 6 13 X 18 cm) wird dann im Schritt 210 die entsprechende Grenzinformationsdichte, ermittelt, die diesem Format zugeordnet ist. Die Zuordnung wurde dabei beispielsweise wie bereits beschrieben über Testreihen ermittelt, so dass zu jedem in Frage kommenden Format eine Grenzinformationsdichte abrufbar ist.

Im Schritt 220 wird dann die Downsampling-Rate ermittelt, die ausgehend von den Originalbildern des Client PC nach Ausführen des Downsampling zu einer Pixeldichte führt, die der Grenzinformationsdichte entspricht. Da die Größe (die Pixelzahl) der Originalbilder leicht ermittelt werden kann, kann daraus dann auch leicht bei vorliegender Grenzinformationsdichte die maximale Downsampling-Rate ermittelt werden, für die eine noch ausreichende Reproduktionsqualität erwartet werden kann.

Nach dem tatsächlichen Downsampling in Schritt 230 mit der in Schritt 120 ermittelten Rate kann dann in Schritt 240 der Upload erfolgen, der aufgrund der Datenreduktion signifikant weniger Zeit benötigt, während die erwünschte Mindestreproduktionsqualität sichergestellt bleibt.

Für das Downsampling können Standardverfahren verwendet werden, die der Fachmann geeignet wählt. Lediglich beispielhaft seien hier die lineare Interpolation oder die bikubische Interpolation genannt.

Gemäß einem weiteren Ausführungsbeispiel wird im Schritt 210 nicht eine Grenzinformationsdichte ermittelt, die für die Produktionsgrösse des zu produzierenden Fotos spezifisch ist, sondern es wird vielmehr die Tatsache ausgenutzt, dass die meisten bestellten Fotos nur vergleichsweise geringe Grössenunterschiede aufweisen, bei denen der Unterschied in der optimalen minimalen Pixeldichte nicht sehr signifikant ist. In diesen Fällen kann eine "pauschale" minimale Informationsdichte (also ein einheitlicher PPI-Wert, z. B. 220 PPI) für mehrere Fotogrössen verwendet werden. Es entfällt dann der Schritt 210 der Ermittlung der Grenzinformationsdichte, da dann die zu verwendende Grenzinformationsdichte vorab fest definiert ist, zumindest für eine gewisse Reihe an verschiedenen Reproduktionsgrössen (z. B. 9X13 cm und 10X15 cm). Für grössere Reproduktionsgrössen kann dann dagegen unter Umständen gemäß einem Ausführungsbeispiel ein spezifischer anderer Wert für die Grenzinformationsdichte gewählt werden.

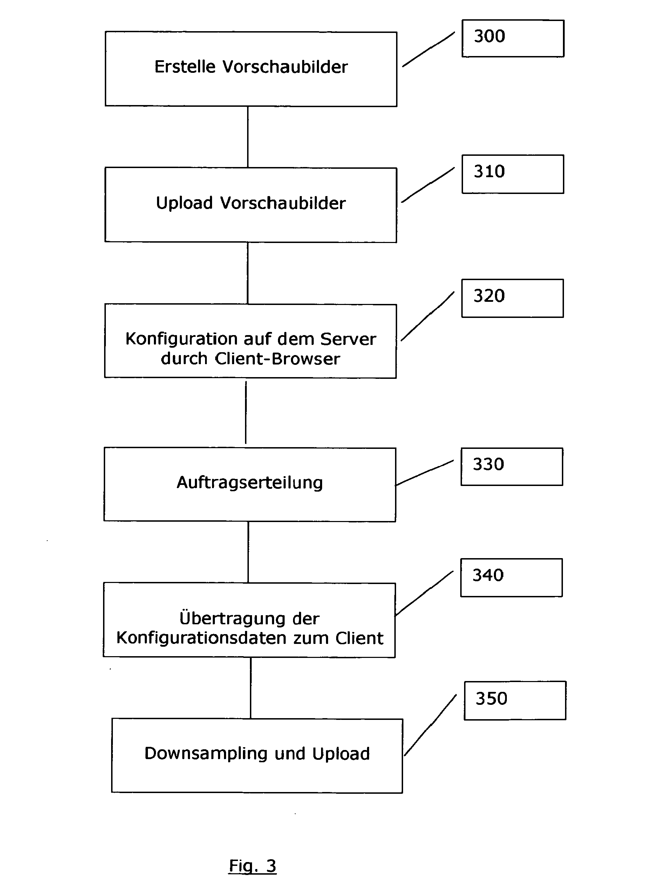

Nachfolgend wird ein weiteres Ausführungsbeispiel erläutert, bei dem der Konfigurationsvorgang auf dem Server erfolgt, und zwar auf Grundlage von zuvor hochgeladenen Vorschaubildern, die auf der Basis der Originalbilder erzeigt wurden. Dieses Verfahren wird nachfolgend unter Bezugnahme auf Fig. 3 beschrieben.

Zunächst werden im Schritt 300 die Vorschaubilder auf dem Client-PC durch Downsampling der Kundenfotos erzeugt, wofür z. B. ein spezielles in den Browser geladenes Upload-Programm verwendet wird. Dieses kann mit einer beliebigen der zur Verfügung stehenden Technologien (z.B. ActiveX oder Java-Applet) realisiert werden und dient zur Erstellung der Vorschaubilder und deren Upload. Neben einem reinen Downsampling wird dabei vorzugsweise zusätzlich eine Datenkompression durchgeführt, wobei eines der üblichen Standardverfahren wie JPEG, JPEG2000, LZW, ZIP oder Packed Bits verwendet werden kann. Dabei kann auf die bekannten Verfahren zur Erstellung derartiger "Thumbnails" für Webanwendungen zurückgegriffen werden.

Das Upload-Programm überträgt in Schritt 310 an den Produktionsserver oder an den Bestellserver nicht nur die im Schritt 300 erstellten Vorschau-Bilder, sondern auch die Namen und die genaue Lage (Laufwerkspfad) der den übertragenen Vorschaufotos entsprechenden Original-Fotos auf dem Kunden-Rechner.

Die Vorschaubilder werden später lediglich für die Konfiguration des Fotoprodukts (nicht für die eigentliche Fotoproduktion) benötigt, weshalb eine geringe Pixeldichte (z. B. 72 DPI) erforderlich ist. Damit kann jedoch eine sehr starke Datenreduktion erzielt werden, so dass die hochzuladende Datenmenge deutlich verringert, z. B. auf nur wenige KB pro Foto. Aus diesem Grund können die Vorschaufotos sehr schnell hochgeladen werden. Typischerweise wird für das reine Hochladen von 100 Vorschaufotos weniger Zeit benötigt als für nur ein Foto im herkömmlichen Verfahren erforderlich wäre.

Im nächsten Schritt 320 erfolgt die Produkt-Konfiguration. Da hierbei auf der Website ohnehin nicht die originalen Daten angezeigt werden könnten, bietet die Verwendung der Vorschaubilder keinerlei Nachteile bei der Produktkonfiguration. Für den Schritt der Produktkonfiguration sind die Vorschaubilder hinreichend präzise.
Bei der Produkt-Konfiguration durch den Kunden wird insbesondere festgelegt, in welcher Größe Digitalkamera-Fotos letztendlich reproduziert werden müssen.

Nach der Produkt-Konfiguration erfolgt im Schritt 330 die Bestellung der konfigurierten Waren durch den Kunden. Erst in diesem Moment ist für jedes Fotoprodukt genau festgelegt, in welcher Größe die hochgeladenen Fotos in der Produktion weiterverarbeitet werden müssen.

Auf der Grundlage der Reproduktionsgrösse kann nun auf ähnliche Weise wie im vorherigen Ausführungsbeispiel eine Grenzinformationsdichte sowie eine entsprechende Downsamplingrate ermittelt, ein Downsampling durchgeführt und die Fotos hochgeladen werden.

Die Datenreduktion erfolgt hierbei über Downsampling der Fotodaten auf dem Kunden-PC mit Hilfe eines automatischen in diesem Schritt in den Web-Browser geladenen Upload-Programms. Um diesen Prozeß durchführen zu können, werden an dieses im Browser des Kunden installierte Upload-Programm allerdings zunächst im Schritt 340 alle für die Reduktion notwendigen Daten vom Produktionsserver oder Bestellserver gewissermaßen zurückübertragen. Hierzu gehören sowohl die eingangs an den Produktionsserver oder Bestellserver übermittelten Daten über den Speicherort der Kundenfotos auf dem Kunden-PC als auch die ausgewerteten Bestelldaten (Reproduktionsgrössen), aus denen sich die erforderlichen Downsamplingraten ermitteln lassen. Im Schritt 350 wird dann ähnlich dem vorherigen Ausführungsbeispiel ein Downsampling und ein Upload der downgesampelten Originalbilder durchgeführt.

Gemäß einem weiteren Ausführungsbeispiel Können noch weitere Optimierungen durchgeführt werden. Werden z. B. mehrere verschiedene Produkte bestellt, bei denen Fotos mehrfach verwendet werden sollen, so werden mehrfach verwendete Fotos werden nur einmal hochgeladen, und zwar in der größten benötigten Qualität.

Liegen die Fotos in einer geringeren Auflösung vor, als für die Produktion erforderlich ist, dann werden sie in einem Ausführungsbeispiel unverändert übertragen. Müssen Fotos geschnitten werden, dann wird ein Downsampling auf die Größe durchgeführt, die für eine flächenfüllende Abbildung mindestens erforderlich ist. Hierzu wird dann die Information darüber, in welcher Form das Foto geschnitten werden soll, an den Client zurückübertragen. Daraus kann dann in Verbindung mit der Reproduktionsgrösse ermittelt werden, um welches Maß die eigentlich auf der Grundlage der Reproduktionsgrösse mögliche Downsampling-Rate wegen des Schneidens des Fotos, was ja quasi eine Rückvergrösseung für eine flächenfüllende Abbildung erfordert, verringert werden ums.

Gemäß einem weiteren Ausführungsbeispiel wird neben einem einen Downsampling zusätzlich (oder auch alternativ) eine Datenkompression der Originalbilder durchgeführt.

Die Kompression kann dabei gemäß einem Ausführungsbeispiel zusätzlich zu dem Downsampling ausgeführt werden. Wird hierbei ein Kompressionsalgorithmus mit verlustfreier Kompression verwendet, so ist kein Informationsverlust durch die Kompression zu besorgen, so dass die Kompression immer angewendet werden kann.

Allerdings kann, abhängig vom Ausführungsbeispiel auch ein verlustbehafteter Kompressionsalgorithmus Verwendung finden. In diesem Fall kann gemäss einem Ausführungsbeispiel berücksichtigt werden, dass damit ein Qualitätsverlust einhergehen kann. Dem kann beispielsweise gemäss einem Ausführungsbeispiel Rechnung getragen werden, indem die verwendete Kompressionsrate bei Verwendung eines solchen nicht verlustfreien Kompressionsalgorithmus einen maximalen Wert nicht übersteigt. Dieser maximale Wert kann dabei über Testreihen ermittelt werden, indem für einen bestimmten verlustbehafteten Kompressionsalgorithmus (z.B: JPEG) ermittelt wird, ab welcher Kompressionsrate noch eine akzeptable Qualität im Sinne einer gewünschten Mindestqualität bei der Reproduktion erzielbar ist. Diese maximale Kompresssionsrate kann dann gemäss einem Ausführungsbeispiel vor dem Hochladen der Originalbilder auf die Originalbilder angewendet werden.

Gemäß einem weiteren Ausführungsbeispiel kann über Testreihen die maximale Kompressionsrate als zusätzlicher Parameter, zusätzlich zur minimalen Informationsdichte ermittelt werden. Es ergibt sich dann aus solchen Testreihen für einen bestimmten Kompressionsalgorithmus ein Wertepaar aus minimaler Informationsdichte und maximaler Kompressionsrate. Gegebenenfalls können solche Wertepaare auch so ermittelt werden, dass sie für bestimmte Reproduktionsgrössen spezifisch sind. Es ergibt sich dann z. B. für eine Reproduktionsgrösse von 9X13 cm ein Wertepaar aus minimaler Informationsdichte I1 und maximaler Kompressionsrate K1, für die Reproduktionsgrösse 10X15 cm aus I2 und K2, usw.

Anhand dieser Wertepaare, die in einer Konfigurationstabelle abgelegt werden können und z. B. vom Produzenten selbst gewählt werden können, kann dann eine maximale Downsamplingrate und eine maximale Kompressionsrate abhängig von der Reproduktionsgrösse ermittelt werden. Entsprechend wird dann das Originalfoto downgesampelt und komprimiert, bevor es zum Bestellserver übertragen wird.

Nachfolgend wird nun ein Ausführungsbeispiel beschrieben, bei dem das Originalbild bereits in komprimierter Form vorliegt. Insbesondere der Fall, bei dem die Kompression des Originalbildes nicht verlustfrei erfolgte ist dabei nachfolgend von Interesse. Für den Fall einer verlustfreien Kompression kann das Originalbild einfach komprimiert werden, auch die Kompressionsrate ist dabei unkritisch, da keine Informationen verlorengehen.

Zunächst wird nun ein Ausführungsbeispiel beschrieben, das die eventuell bereits erfolgte (verlustbehaftete) Kompression der Originalbilder, die. z. B. bereits von der Kamera beim Aufnehmen oder später vom Benutzer durchgeführt wurde, berücksichtigt.

Bei diesem Ausführungsbeispiel wird einer Reproduktionsgrösse des zu erstellenden Fotos (also z. B. 9X13 cm, 10X15 cm, etc.) nicht nur eine Grenz-Informationsdichte (in PPI) sondern zusätzlich eine maximale Kompression (z. B. in Form einer maximalen Kompressionsrate) zugeordnet. Diese maximale Kompression kann für die unterschiedlichen Reproduktionsformate analog zur Grenzinformationsdichte aus Testreihen ermittelt werden, etwa in der bereits beschriebenen Weise. Es ergibt sich dann für unterschiedliche Reproduktionsgrössen jeweils Tripel aus Reproduktionsgrösse, Grenzinformationsdichte und Kompressionslimit, die dann z. B. festgelegt, für eine bestimmte Produktionsserverumgebung definiert und in einer Nachschlagtabelle hinterlegt werden. Diese Tripel kann der Betreiber des Produktionsservers (also z. B. das Fotolabor) anhand von Testreihen und den gewünschten Mindest-Qualitätsanforderungen selbst definieren. Für unterschiedliche Reproduktionsmethoden (z. B. Digital-Belichter, Digital-Druck) können dabei unterschiedliche Tripel hinterlegt werden.

Wählt dann ein Benutzer ein Reproduktionsformat im Rahmen der Produktkonfiguration aus, so sind damit sowohl die Grenz-Informationsdichte als auch das Kompressionslimit ermittelbar.

Da bei Digitalkamerafotos, die z. B. im JPEG-Format oder anderen nicht verlustfrei komprimierten Formaten vorliegen, neben der Pixeldichte auch der verwendete JPEG-Komprimierungsfaktor einen entscheidenden Einfluß auf die Fotoqualität hat, wird dieser dann entsprechend berücksichtigt.

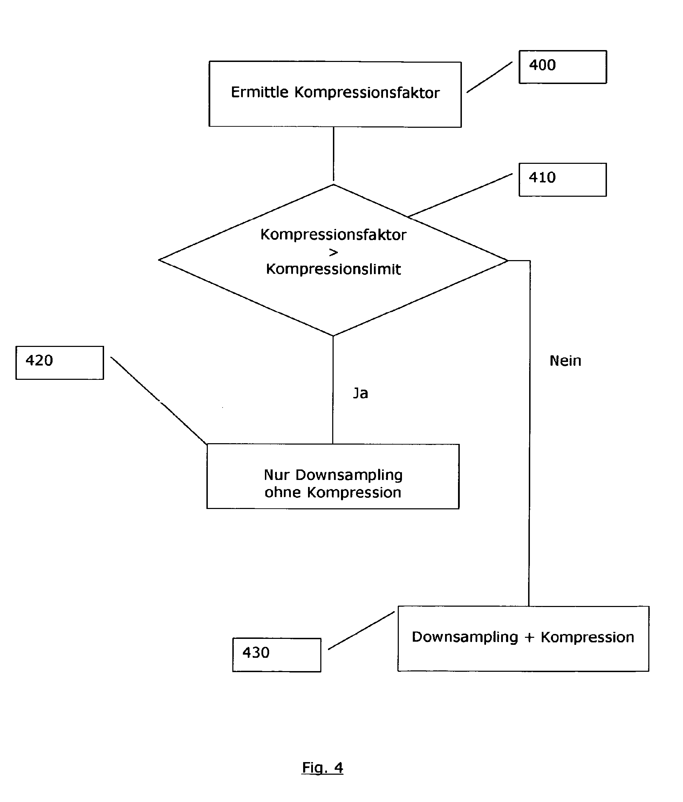

Eine vergleichsweise einfache Berücksichtigung des Parameters Kompressionsverhältnis ist in Fig. 4 schematisch dargestellt. In Schritt 400 wird zunächst ermittelt, mit welchem Kompressionsfaktor das Originalbild bereits komprimiert ist. Falls diese Information nicht direkt aus den Metadaten des gespeicherten Bildes ableitbar ist, so kann durch Ermittlung der Auflösung (=Zahl der Pixel), eine Abschätzung des Kompressionsfaktor ermittelt werden, indem die tatsächliche Dateigrösse des Originalbildes mit einer typischen durchschnittlichen Dateigröße eines Bildes dieser Auflösung ins Verhältnis gesetzt wird.

Im Schritt 410 wird nun die ermittelte Kompressionsrate mit dem Kompressionslimit verglichen. Liegt sie über dem Kompressionslimit, so findet keine Kompression (und auch kein Downsampling) statt. Liegt sie hingegen unter dem Kompressionslimit, so können Downsampling und Kompression durchgeführt werden.

Mit der Abfrage 410 soll sichergestellt werden, dass Daten nur dann mittels Kompression reduziert werden, wenn das ohne Einfluß auf die erzielbare Qualität wirklich möglich ist.

Gemäß einem Ausführungsbeispiel wird die im Schritt 430 durchgeführte Kompression hinsichtlich der Kompressionsrate so durchgeführt, dass die verwendete Kompressionsrate der in der Konfigurationstabelle abgelegten Kompressionsrate entspricht, die für die gewählte Reproduktionsgrösse laut Testreihen bzw. laut Vorkonfiguration maximal verwendet werden sollte.

Gemäß einem weiteren Ausführungsbeispiel wird dabei beispielsweise eine Sicherheitsmarge für den Fall berücksichtigt, dass das Originalbild bereits komprimiert ist. Dies kann dadurch geschehen, dass die ermittelte zu verwendende Kompressionsrate Kv um einen bestimmten vordefinierten Betrag verringert wird.

Eins solche Sicherheitsmarge kann auch für nicht bereits komprimierte Originalbilder vorgesehen werden, die Sicherheitsmarge kann dabei aber auch geringer ausfallen oder gänzlich weggelassen werden.

Gemäß einem Ausführungsbeispiel wird die Kompression der Originalbilder nicht additiv zu dem Downsampling sondern alternativ anstelle des Downsampling verwendet. Die in diesem Fall verwendete Kompressionsrate kann in diesem Fall analog zu den vorher beschriebenen Verfahren unter Berücksichtigung des Kompressionslimits sowie einer eventuell beim Originalbild bereits vorhandenen Kompression durchgeführt werden. Das bedeutet, dass zunächst die Kompressionsrate ermittelt wird und dann eine (weitere) Kompression bzw. eine Kompression mit einem höheren Kompressionsfaktor erfolgt, wenn die maximale Kompressionsrate grösser ist als die bereits vorhandene Kompression. Hierbei muss beachtet werden, dass Bildfehler aufgrund von wiederholter Kompression "sich addieren" können.

Gemäß einem weiteren Ausführungsbeispiel wird dann, wenn die ermittelte Kompressionsrate des Originalbildes größer ist als das Kompressionslimit weder eine Kompression noch ein Downsampling durchgeführt.

Gemäß eines Ausführungsbeispiel kann die Prüfung, ob die gemäß Konfiguration zu verwendende Kompressionsrate kleiner ist als die bereits erfolgte Kompression der Originalbilder (bzw. die Prüfung ob eine Reduktion der Originalbilder für das Hochladen sinnvoll ist) wie folgt durchgeführt werden. Die zu komprimierenden Originalbilder werden mit der zu verwendenden Kompressionsrate komprimiert und die Größe der resultierenden Datei wird mit der Größe der Originaldatei verglichen. Ist die resultierende Datei größer als die Originaldatei, so muss die Kompressionsrate des Originalbildes bereits größer sein als die gemäß Konfigurationsdaten ermittelte zu verwendende Kompressionsrate. In diesem Fall wird gemäß einem Ausführungsbeispiel das Originalbild übertragen, ohne Vornahme einer Kompression, gemäss eines Ausführungsbeispiels auch ohne ein Downsampling. Lässt sich hingegen durch die Anwendung der Datenreduktion auf das Originalbild, d.h. durch Downsampling und/oder Kompression mit den jeweils der Reproduktionsgrösse entsprechenden Parametern, eine Verringerung der Dateigröße gegenüber dem Originalbild erzielen, so wird das reduzierte Bild hochgeladen. Hier kann gegebenenfalls vorher noch eine Prüfung erfolgen, ob eine Reduktion um mindestens eine gewisse vordefinierte Marge erzielt wurde, wobei nur in diesem Fall das reduzierte Bild hochgeladen und im anderen Fall das Originalbild übertragen wird.

Gemäss einem Ausführungsbeispiel kann ohne Ermittlung derKompressionsrate des Originalbildes eine (vordefinierte) Kompressionsrate, ggf. in Verbindung mit einem Downsampling angewendet werden, und zwar ohne Ermittlung des Kompressionsfaktors des Originalbildes. Das resultierende reduzierte Bild wird dann mit dem Originalbild hinsichtlich seines Datenvolumens verglichen. Ist es kleiner als das Originalbild, so wird das auf diese Weise reduzierte Bild hochgeladen. Gegebenenfalls kann dabei eine Marge definiert werden, um die das so reduzierte Bild hinsichtlich seines Datenvolumens kleiner sein soll als das Originalbild. Ist dies der Fall, so wird das reduzierte Bild hochgeladen, im anderen Falle das Original.

Die oben beschriebenen Ausführungsbeispiele ermöglichen eine signifikante Effizienzsteigerung bei der Vorbereitung der Erstellung von Fotoproduktionen. Sie basieren aus der Ermittlung von Parameter-Tupeln, die für jeweils vorgegebene Reproduktionsgrössen definieren, mit welcher (Grenz-)Informationsdichte und/oder gegebenenfalls welcher (Grenz-)Kompression die Datenreduktion erfolgen kann, bevor der Upload durchgeführt wird. Diese Grenzparameter Können z. B. von dem Betreiber des Produktionsservers definiert werden. Er kann diese anhand der Durchführung von Testreihen, in denen die Mindestanforderungen (Grenzparameter) für die von ihm gewünschte Mindestqualität ermittelt werde, bestimmen und dann für den Produktionsserver definieren bzw. einstellen. Diese bilden dann verfahrensspezifische Konfigurationsparameter, anhand derer die mögliche Datenreduktion über Downsampling und/oder Kompression ermittelt werden.

Die Grenzparameter können dabei auch von weiteren Parametern abhängig sein, z.B. Können für unterschiedliche Produktionsarten (Digital-Belichter, Digital-Druck) und/oder für unterschiedliche Kompressionsverfahren unterschiedliche Grenzparameter hinterlegt sein. Der Benutzer definiert dann unter Umständen nicht nur über die Auswahl der Reproduktionsgrösse sondern auch über die Definition weiterer Auswahlparameter(z. B. Produktionsart) den zugeordneten Grenzparametersatz, der dann letztlich die mögliche Datenreduktion bestimmt.

Gemäß einem Ausführungsbeispiel kann dabei auch vom Betreiber des Produktionsservers und/oder vom Kunden eine mindestens gewünschte Datenreduktion definiert werden. , die dann in jedem Fall durchgeführt wird, unabhängig von den weiteren Konfigurationsparametern. Diese Mindestreduktion kann gegebenenfalls abhängig von der mindestens gewünschten Produktionsqualität definiert werden.

Gemäß eines weiteren Ausführungsbeispiels kann eine Mindestmass an Datenreduktion definiert werden, dass erzielt werden muss, damit überhaupt eine reduzierte Form des Originalbildes übertragen wird und nicht das Originalbild selbst. Dies kann dadurch geschehen, dass die Dateigrösse des reduzierten Bildes mit der Dateigrösse des Originalbildes verglichen wird und nur dann, wenn ein Mindestmass an Datenreduktion erzielt wurde, wird das reduzierte Bild übertragen, andernfalls das Original.

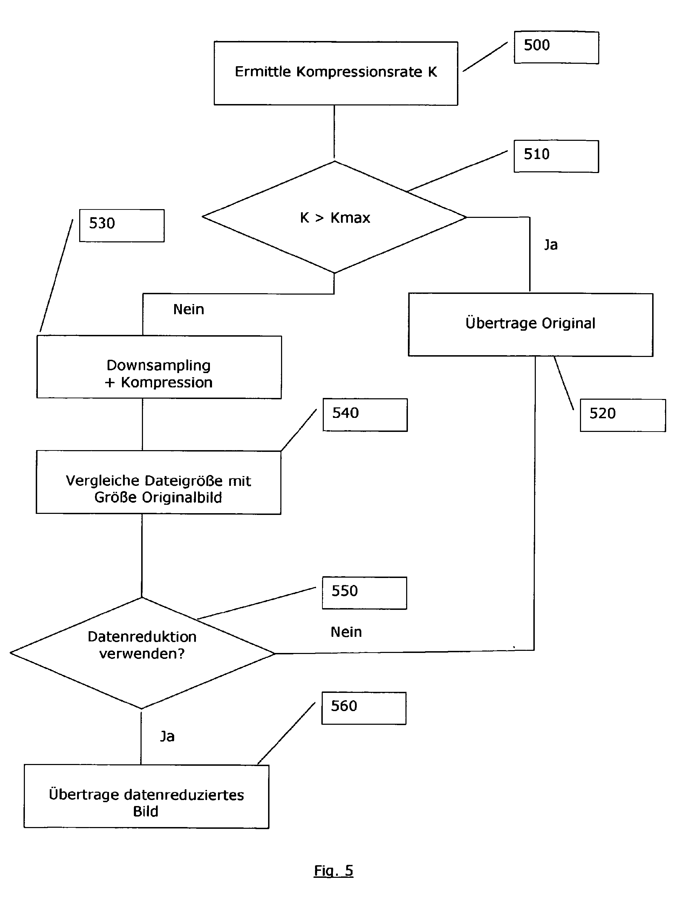

Nachfolgend wird nun ein unter Bezugnahme auf Fig. 5 ein weiteres Ausführungsbeispiel der Erfindung beschrieben, das den Fall betrifft, indem die Originalbilder bereits mit verlustbehafteter Komprimierung (z. B. mittels JPEG) komprimiert wurden.

In diesem Fall wird zunächst in Schritt 500 die Kompressionsrate des Originalbildes über Tabellen aus Testreihen mit den üblichen Kameraeinstellungen (fein, normal, eco) heuristisch ermittelt, indem aus der Auflösung und der Bildgröße in KB die ungefähre Kompressionsrate ermittelt wird. Hierzu können mit verschiedenen Digitalkameras und verschiedenen Testbildgrössen bzw. Auflösungen mittels Testreihen typische bzw. durchschnittliche Werte für Dateigrössen bei einer bestimmten Auflösung bzw. bei einer bestimmten Kompressionsrate ermittelt werden. Aus derartigen Testreihen lässt sich dann ermitteln, dass z. B. bei einer bestimmten Auflösung eines Bildes sowie bei einer bestimmten Dateigrösse (in Kilobyte) das Bild mit einer bestimmten Kompressionsrate komprimiert sein müsste. Dies wird insbesondere auch deshalb benötigt, weil der aus z.B. einer JPEG-Datei ermittelbare Kompressionsfaktor aufgrund nicht genormter Skalen nur schwer interpretiert werden kann.

Die resultierende ermittelte Kompressionsrate K wird nun mit den Konfigurationseinstellungen (also der maximalen Kompressionsrate Kmax) verglichen (Schritt 510). Liegt die Kompressionsrate des zu übertragenden Originalbildes über dem Wert, der in den Konfigurations-Tabellen als maximal zu verwendende Rate angegeben ist (Schritt 510), dann wird kein Downsampling mehr durchgeführt (Schritt 520). Das Origiginal-Bild wird in diesem Fall unverändert hochgeladen.

Ist die ermittelte Kompressionsrate kleiner gleich dem maximalen Wert, wird mit den Einstellungen gemäss Konfiguration (maximale Kompression, Downsamplingrate entsprechende der Reproduktionsgrösse) ge-down-sampled und komprimiert (Schritt 530), wie dies bereits zuvor beschrieben wurde. Das Ergebnis der Datenreduktion wird nun im Schritt 540 hinsichtlich seiner Dateigrösse mit der Dateigröße des Originals verglichen und abhängig von dem Vergleich entschieden, welcher Form die Datenübertragung ausgeführt wird (in reduzierter Form oder imOriginal).

Gemäß einem Ausführungsbeispiel wird im Schritt 550 abhängig vom Vergleichsergebnis aus Schritt 540 anhand eines entsprechenden Kriteriums, das z. B. vom Betreiber des Produktionsservers oder auch vom Benutzer selbst vorgegeben wird, entschieden ob und in welcher Form eine Datenreduktion verwendet werden soll. Dieses Kriterium kann z. B. gemäss eines Ausführungsbeispiels darin bestehen, zu ermitteln, ob ein Mindestmass an Datenreduktion erzielt wurde, Wenn z. B. die Reduktion eine Reduktion um mindestens x% bringt, wird sie verwendet, d.h. das datenreduzierte Foto übertragen (Schritt 560), ansonsten das Originalfoto übertragen (Schritt 520).

Bei einer Umsetzung des Verfahrens sollten für das Datenformat JPEG sowohl die Grenz-Eingangspixeldichte, ab der keine sichtbare Qualitäts-Verbesserung mehr möglich ist (z.B. 220 PPI), als auch der verwendete JPEG-Komprimierungsfaktor zu den einstellbaren Verfahrensparametern gehören. Weitere Parameter, die bei einer software-technischen Umsetzung sinnvoll berücksichtigt werden könnten, sind z.B. die Produktionsart (Digital-Belichter, Digital-Druck) oder die mindestens gewünschte Datenreduktion

Der Einsatz der in den vorherigen Ausführungsbeispielen beschriebenen Verfahren bietet Online-Fotodiensten erhebliche Vorteile.

So wird aufgrund des sehr schnellen anfänglichen Hochladens der Vorschaubilder wird der Kunde in die Lage versetzt, ohne größere Wartezeiten seine Bestellung konfigurieren und absenden (bestätigen) zu können fast so, wie es bei anderen Online-Shops möglich ist.

Daneben wird trotz dieser positiven Effekte ein qualitativer Mindeststandard für die Fotoreproduktion sichergestellt, so dass sowohl hinsichtlich Qualität der Reproduktion als auch hinsichtlich des für die Vorbereitung der Produktion erforderlichen Zeit- und Datentransferaufwands eine Optimierung erfolgen kann.

Insbesondere wird dadurch beispielsweise auch das Online-Bestellen von persönlichen Fotobüchern ermöglicht, was bei den Verfahren gemäß dem Stand der Technik aufgrund der involvierten Datenmengen praktisch nicht möglich ist. Das Hochladen von Vorschaubildern, die Konfiguration und das anschließende Hochladen der reduzierten Daten ermöglichen jedoch nun das Online-Bestellen selbst großer persönlicher Fotobücher möglich.

Im Rahmen einer Testimplementierung wurde dies anhand eines konkreten Beispiels überprüft. Es sollte dabei ein Fotobuch in der Größe 20 cm x 20 cm bestehend aus 192 Kundenfotos einer handelsüblichen 3.2 Megapixel-Kamera erstellt werden. Die 192 Fotos belegen auf dem Kunden-PC 243 MB Speicherplatz. Das über die Referenzimplementierung automatisch erstellte Fotobuch bestand aus insgesamt 80 Fotobuchseiten, die bis zu 4 Fotos pro Seite beinhalten. 8% der Fotos wurden im Fotobuch ganzseitig dargestellt.

Durch die Anwendung des beschriebenen Verfahrens gemäß einem Ausführungsbeispiel der Erfindung wurde die an den Produktionsserver oder Bestellserver hochzuladende Datenmenge auf insgesamt 71.4 MB reduziert, wovon 2,4 MB auf die Vorschau-Bilder und 69 MB auf den finalen Upload der datenreduzierten Fotos entfielen. Dabei wurden die für eine ganzseitige Darstellung vorgesehenen Fotos im Original hochgeladen.

Durch das Hochladen von Vorschaubildern wird dabei auch insbesondere die Konfiguration mehrerer unterschiedlicher Produkttypen (Abzüge, Fotobuch, Grußkarten, Kalender, ...) im Rahmen nur einer Online-Bestellung möglich.

Dem Fachmann ist klar, dass die Ausführungsbeispiele der vorliegenden Erfindung durch auf einem oder mehreren Computern ablaufende Software, durch entsprechend ausgestaltete Computerhardware oder durch eine Kombination aus beidem implementiert werden können. Dem Fachmann ist ferner klar, dass sowohl der Produktionsserver, als auch der Client-Computer sowie das beschriebene Gesamtsystem wie auch die Operation des Systems implementierende Computerprogramme Ausführungsbeispiele der Erfindung sein können. Ferner versteht der Fachmann, dass die vorstehend beschriebenen Ausführungsbeispiele implementiert werden können, indem der die Produktion vorbereitende Bestellvorgang, der die Definition bzw. Erstellung und das Hochladen der Bilddaten umfasst, zwischen einem Client und einem Bestellserver abgewickelt werden können, von dem dann die fertigen Bilddaten an einen für die Produktion zustaändigen Produktionsserver übermittelt werden.

## Patentansprüche

1. Verfahren zur Vorbereitung der Erstellung eines basierend auf ein oder mehreren digitalen Original-Bildern eines Client-Computers von einem Produktionsserver auf der Grundlage von Druckvorlagen zu erstellenden Fotoprodukts, wobei das Verfahren aufweist:
basierend auf einer minimalen Informationsdichte, die zur Erzielung einer gewünschten Mindestproduktionsqualität erforderlich ist, sowie der Informationsdichte eines Originalbildes des Client-Computers, Ermittlung einer maximalen Downsamplingrate;
Downsampling des Originalbildes mittels der ermittelten Rate; und
Übertragen des down-gesampelten Original-Bildes als Basis für die Druckvorlage über eine Datenverbindung vom Client-Computer zum Produktionsserver oder einem Bestellserver.

2. Verfahren nach Anspruch 1, welches ferner aufweist:
Konfiguration des Fotoprodukts durch den Client-Computer, wobei die Konfiguration des Fotoprodukts zumindest die Festlegung der Größe der jeweils zu produzierenden Bilder umfaßt;
basierend auf der durch die Konfiguration vorgegebenen Größe eines zu produzierenden Bildes, Ermittlung einer entsprechenden minimalen Informationsdichte, bei der unter der vorgegebener Produktionsgrösse noch hinreichende Bildqualität bei der Produktion erzielt werden kann;
basierend auf der ermittelten minimalen Informationsdichte sowie der Informationsdichte eines Originalbildes des Client-Computers, Ermittlung einer maximalen Downsamplingrate;
Downsampling des Originalbildes mittels der ermittelten Rate; und
Übertragen des down-gesampelten Original-Bildes als Basis für die Druckvorlage über eine Datenverbindung vom Client-Computer zum Produktionsserver oder Bestellserver.

3. Verfahren nach Anspruch 1 oder 2, wobei das Verfahren ferner aufweist:
Erstellen von Vorschaubildern mit reduzierter Datenmenge am Client-Computer basierend auf den Originalbildern des Client-Computers;
Übertragen der Vorschaubilder vom Client-Computer an den Produktionsserver oder Bestellserver;
Konfiguration des Fotoprodukts durch den Client-Computer über die Datenverbindung und Anzeige des konfigurierten Fotoprodukts auf dem Client-Computer, wobei die Konfiguration des Fotoprodukts zumindest die Festlegung der Größe der jeweils zu produzierenden Bilder umfaßt.

4. Verfahren nach Anspruch 1,2 oder 3, welches ferner umfaßt:
zusätzlich oder alternativ zur Ermittlung der maximalen Pixeldichte bei durch die Konfiguration vorgegebener Produktionsgrösse, Ermittlung einer maximalen Kompressionsrate;
Durchführen einer Kompression mit der ermittelten Rate; und
Übertragen des komprimierten Bildes an den Server.

5. Verfahren nach Anspruch 4, welches ferner aufweist:
Ermittlung der Kompressionsrate des Originalbildes;
falls die maximale Kompressionsrate größer ist als die Kompressionsrate des Originalbildes, Komprimieren des Originalbildes vor der Übertragung an den Produktionsserver oder Bestellserver und/oder
falls die maximale Kompressionsrate kleiner ist als die Kompressionsrate des Originalbildes, Verzicht auf die Durchführung einer Kompression und/oder eines Downsampling.

6. Verfahren nach Anspruch 1,2,3, 4 oder 5, welches ferner aufweist:
Downsampeln des Originalbildes und Komprimieren des Originalbildes mit der maximalen Kompressionsrate;
Vergleich der Dateigrösse des resultierenden Bildes mit der Dateigrösse des Originalbildes;
falls die resultierende Dateigrösse nicht um ein Mindestmass kleiner ist als die Dateigrösse des Originalbildes, Verzicht auf Downsampling und/oder Durchführen der Kompression des Originalbildes, andernfalls Downsampling und Kompression vor der Übertragung.

7. Verfahren nach einem der vorhergehenden Ansprüche, welches ferner eines oder mehrere der folgenden Merkmale aufweist:
Einhalten einer Sicherheitsmarge, um die ermittelte zu verwendende zu verwendende Kompressionsrate reduziert wird, falls das Originalbild bereits in komprimierter Form vorliegt;
Verwenden des reduzierten Bildes für das Hochladen nur dann, wenn dieses um eine Mindestmarge kleiner ist als das Originalbild.

8. Verfahren nach einem der vorhergehenden Ansprüche, welches ferner eines oder mehrere der folgenden Merkmale aufweist:
falls ein Originalbild in der zu erstellenden Fotoproduktion mehrfach verwendet wird, lediglich einmaliges Übertragen des downgesampelten Bildes in der
höchsten erforderlichen Qualität.

9. Verfahren nach einem der vorhergehenden Ansprüche, wobei
für jeweils unterschiedliche durch die Konfiguration vorgegebenen Produktionsgrössen die entsprechende erforderliche Pixeldichte und gegebenenfalls die ferner zugeordnete maximale Kompressionsrate mittels einer Nachschlagtabelle ermittelt werden.

10. Vorrichtung zur Vorbereitung der Erstellung eines basierend auf ein oder mehreren digitalen Original-Bildern eines Client-Computers von einem Produktionsserver auf der Grundlage von Druckvorlagen zu erstellenden Fotoprodukts, wobei die Vorrichtung aufweist:
eine Einrichtung zur Konfiguration des Fotoprodukts durch den Client-Computer, wobei die Konfiguration des Fotoprodukts zumindest die Auswahl der Größe der jeweils zu produzierenden Bilder umfaßt;
eine Einrichtung zur, basierend auf der durch die Konfiguration vorgegebenen Größe eines zu produzierenden Bildes, Ermittlung einer entsprechenden minimalen Informationsdichte, bei der unter der vorgegebener Produktionsgrösse noch hinreichende Bildqualität bei der Produktion erzielt werden kann;
eine Einrichtung zur, basierend auf der ermittelten minimalen Informationsdichte sowie der Informationsdichte eines Originalbildes des Client-Computers, Ermittlung einer maximalen Downsamplingrate;
eine Einrichtung zum Downsampling des Originalbildes mittels der ermittelten Rate; und
eine Einrichtung zum Übertragen des down-gesampelten Original-Bildes als Basis für die Druckvorlage über eine Datenverbindung vom Client-Computer zum Produktionsserver oder einem Bestellserver.
